# EUROPEAN PATENT APPLICATION

(11) **EP 4 407 738 A1**
(43) Date of publication of application: **31.07.2024**
(21) Application number: 23843371.8
(22) Date of filing: 19.07.2023
(51) Int. Cl.: H01M 10/0587, H01M 10/42, H01M 4/66, H01M 10/052, H01M 10/04, H01M 50/533

(54) **JELLY-ROLL TYPE ELECTRODE ASSEMBLY AND SECONDARY BATTERY COMPRISING SAME**

(30) Priority: 19.07.2022 KR 20220088851
(71) Applicant: LG Energy Solution, Ltd., Seoul 07335 (KR)
(72) Inventor: JU, Jeonghun, Daejeon 34122 (KR); KIM, Hyoung Kwon, Daejeon 34122 (KR)
(74) Representative: Goddar, Heinz J.
(86) International application number: PCT/KR2023/010407
(87) International publication number: WO 2024/019525

(57) **Abstract**

A jelly-roll type electrode assembly includes a first electrode, a first separator, a second electrode, and a second separator sequentially stacked and wound. A first layer includes an outermost layer of the first electrode and the first separator, and a second layer includes the second electrode, the second separator, and a layer in contact with an inner circumferential surface of the outermost layer. The first and second layers each include respective first end portions where winding begins and respective second end portions where winding ends. The second layer is bent to wrap around one edge portion of the first layer parallel to the longitudinal direction so as to expose the second end portion of the second layer on an outer circumferential surface of the first layer.

## Description

### CROSS-REFERENCE TO RELATED APPLICATIONS

The present application is a national phase entry under 35 U.S.C. § 371 of International Application No. PCT/KR2023/010407 filed July 19, 2023, which claims priority from Korean Patent Application No. 10-2022-0088851 filed on July 19, 2022 with the Korean Intellectual Property Office, the entire contents of which are incorporated herein by reference.

### BACKGROUND OF THE INVENTION

### [Technical Field]

The present invention relates to a jelly-roll type electrode assembly and a secondary battery including the same, and more particularly, to a jelly-roll type electrode assembly having an outer circumference tap structure and a cylindrical secondary battery including the same.

### [Background Art]

For a cylindrical battery, a jelly-roll type electrode assembly is manufactured by rolling a long electrode having a prescribed width into a roll form.

Cylindrical batteries are currently being designed to have a structure in which the number of taps, which are passages through which electrons can move, is increased in both electrodes in order to obtain high output characteristics through low resistance implementation.

A lead part of the jelly-roll type electrode assembly is used as a current path by attaching a tab to an uncoated portion. In this case, when there is an outer negative electrode tab, a step occurs due to a thickness of the negative electrode tab, so local stress is generated in the jelly-roll during charging/discharging, which causes disconnection and deformation.

Therefore, it is necessary to develop a technology capable of solving the above problems while obtaining high output characteristics through low resistance implementation.

### BRIEF SUMMARY OF THE INVENTION

### [Technical Problem]

The present invention has been made in an effort to provide a jelly-roll type electrode assembly with an improved design, and a secondary battery including the same.

The problem to be solved by the present invention is not limited to the above-mentioned issues, and other problems not mentioned will be understood by one skilled in the art from the following description.

### [Technical Solution]

An exemplary embodiment of the present invention provides a jelly-roll type electrode assembly in which a first electrode, a first separator, a second electrode and a second separator are sequentially stacked and wound, wherein when an outermost layer of the first electrode, the first separator, the second electrode and the second separator, and a layer in contact with an inner circumferential surface of the outermost layer are referred to as a first layer and a second layer, respectively, the first layer and the second layer each include a first end portion at which winding begins along a longitudinal direction, and a second end portion at which the winding ends, and wherein the second layer is bent to wrap around one edge portion of the first layer parallel to the longitudinal direction, and thus, the second end portion of the second layer is exposed on an outer circumferential surface of the first layer.

Another exemplary embodiment of the present invention provides a secondary battery including the jelly-roll type electrode assembly described above; and a battery case for accommodating the electrode assembly.

### [Advantageous Effects]

Since the jelly-roll type electrode assembly and the secondary battery including the same according to an exemplary embodiment of the present invention do not include a separate tab on the outermost side, disconnection and deformation due to a thickness of a tab can be prevented.

In addition, the jelly-roll type electrode assembly and the secondary battery including the same according to an exemplary embodiment of the present invention can address local problems such as a side reaction and lithium precipitation due to a thickness of a tape for finishing processing by changing a design of the jelly-roll type electrode assembly.

The effects of the present invention are not limited to the foregoing effects, and effects not mentioned will be apparently understood by one skilled in the art from the present specification and accompanying drawings.

### BRIEF DESCRIPTION OF THE DRAWINGS

FIG. 1 is a perspective view of a jelly-roll type electrode assembly according to an exemplary embodiment of the present disclosure.
FIG. 2 is a cross-sectional view of the jelly-roll type electrode assembly of FIG. 1 according to an exemplary embodiment of the present invention, taken along a direction A-A', after being accommodated in a battery case.
FIG. 3 is a perspective view of a jelly-roll type electrode assembly according to another embodiment of the present disclosure.
FIG. 4 is a side cross-sectional view of the jelly-roll type electrode assembly of FIG. 3 taken along the direction A-A', after being the electrode assembly is placed in a battery case.
FIG. 5 is a perspective view of lifting and wrinkle defects of an outermost layer occurring of the jelly-roll type electrode assembly of FIG. 3.
FIG. 6 shows a side view of a stack structure of a jelly-roll type electrode assembly according to an exemplary embodiment of the present disclosure.
FIG. 7 shows three perspective views of a second layer included in a jelly-roll type electrode assembly.

### DETAILED DESCRIPTION OF THE PREFERRED EMBODIMENTS

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

Hereinafter, the present invention will be described in detail with reference to the drawings. However, it should be noted that the drawings are provided for illustrating the present invention, and the scope of the present invention is not limited by the drawings.

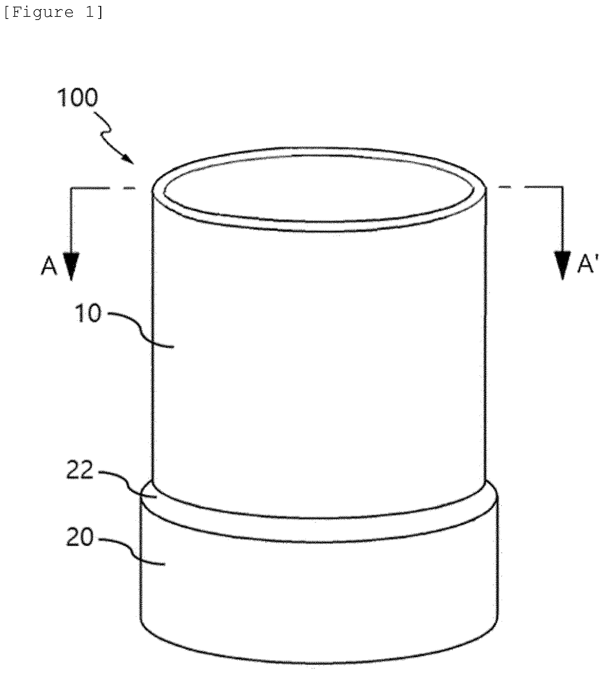

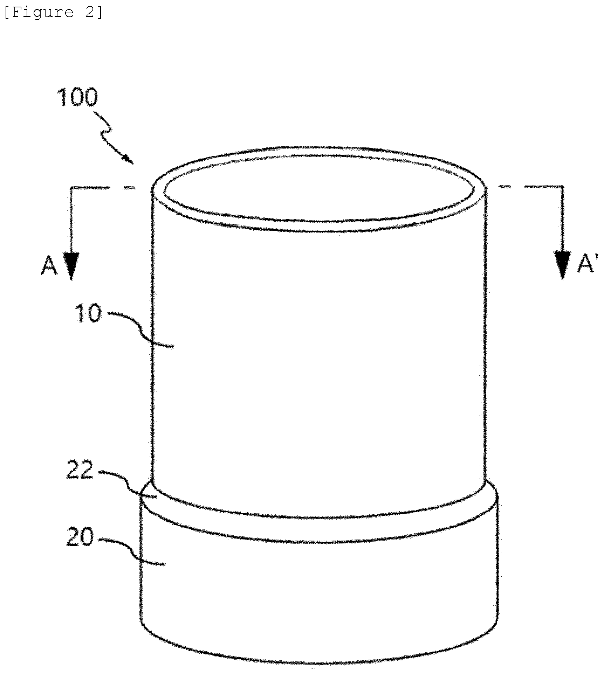

FIGS. 1 and 2 show a jelly-roll type electrode assembly according to an exemplary embodiment of the present invention.

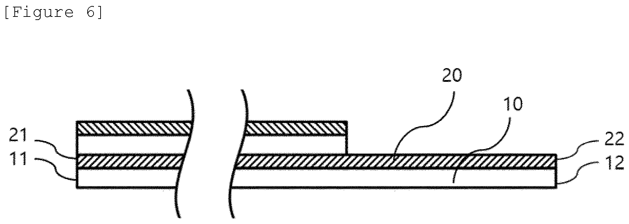

Referring to FIGS. 1 and 6, a jelly-roll type electrode assembly 100 according to an exemplary embodiment of the present invention includes a first layer 10 as an outermost layer, and a second layer 20 as a layer in contact with an inner circumferential surface of the outermost layer. The first layer 10 and the second layer 20 include respective first end portions 11, 21 at which winding begins along a longitudinal direction, and respective second end portions 12, 22 at which the winding ends. The second layer 20 is bent to wrap around one edge portion of the first layer 10 parallel to the longitudinal direction, so that the second end portion 22 of the second layer may be exposed on an outer circumferential surface of the first layer 10.

The outer circumferential surface may refer to a surface, which faces a winding axis, of each layer included in the jelly-roll type electrode assembly, and the inner circumferential surface may refer to a surface of each layer opposite to the outer circumferential surface.

According to an exemplary embodiment of the present invention, a width of the second end portion of the second layer exposed on the outer circumferential surface of the first layer may be 90% or greater and 140% or less based on a circumference of the outer circumferential surface of the first layer. Specifically, a width W2 of the second end portion 22 of the second layer 20 exposed on the outer circumferential surface of the first layer 10 may be 90% or greater and 120% or less or 120% or greater and 140% or less based on the circumference of the outer circumferential surface of the first layer. If the width of the second end portion of the second layer exposed on the outer circumferential surface of the first layer is less than 90%, a proportion of a portion of the first layer exposed at a lower end portion of the electrode assembly increases, so that an effect of protecting a lower end portion of the jelly-roll type electrode assembly may be deteriorated during an insertion process of accommodating the electrode assembly into a battery case. If the width exceeds 140%, the second layer may be wrapped about itself and potentially cause a finish defect. Further, a thickness of the second layer in a region where the second layer is overlapped may cause a side reaction and lithium precipitation due to lack of an electrolyte solution.

According to an exemplary embodiment of the present invention, an area of the second layer 20 exposed on the outer circumferential surface of the first layer 10 is 2% or greater and 40% or less based on a total area of the outer circumferential surface of the first layer. Specifically, the area of the second layer exposed on the outer circumferential surface of the first layer may be 2% or greater, 4% or greater, 6% or greater, 8% or greater or 10% or greater and 40% or less, 38% or less, 36% or less, 34% or less, 32% or less, or 30% or less based on the total area of the outer circumferential surface of the first layer. When the area of the second layer exposed on the outer circumferential surface of the first layer satisfies the range described above, a bending process of the second layer and a finishing of the second end portion may be facilitated. Such a structure protects the lower end portion of the jelly-roll type electrode assembly.

According to an exemplary embodiment of the present invention, a thickness of the second layer 20 exposed on the outer circumferential surface of the first layer 10 may be 1 um or greater and 20 um or less. Specifically, the thickness of the second layer may be 1 um or greater, 3 um or greater, or 5 um or greater, and the thickness of the second layer may be 18 um or less, 16 um or less, 14 um or less, or 12 um or less. When the above-mentioned thickness of the second layer is satisfied, and because the second layer generally is thinner than a seal tape used for finishing upper and lower ends of the electrode assembly, damage to the electrode assembly due to an increase in pressure during a change in volume of the electrode assembly due to charging and discharging cycles of the secondary battery after the electrode assembly is accommodated in the battery case can be minimized. In addition, even when a second layer, i.e., a separator having a thickness similar to that of the seal tape is used, a structure where the separator wraps around one edge portion located at the upper or lower end of the electrode assembly and the seal tape is attached in a direction perpendicular to a longitudinal direction for finishing is provided, so that a step forming region can be significantly reduced, as compared with a structure in which seal tapes each having a predetermined thickness are attached to the upper and lower end edge portions of the electrode assembly in parallel with the longitudinal direction for finishing. With this, it is possible to minimize the above-described local problems occurring in the step forming region.

According to an exemplary embodiment of the present invention, the second layer 20 is bent to wrap around one edge portion of the first layer 10 to extend parallel to the longitudinal direction, and thus, the second end portion 22 of the second layer 20 may be exposed on the outer circumferential surface of the first layer in parallel with the longitudinal direction of the first layer. The second end portion 22 of the second layer 20 is bent to wrap around one edge portion of the first layer 10 to extend parallel to the longitudinal direction, so that during an insertion process of accommodating the jelly-roll type electrode assembly 100 into the battery case, the second layer 20 may serve as a protective layer or seal tape to prevent defects due to damage to the lower end portion of the electrode assembly, and the second end portion may be easily finished.

According to an exemplary embodiment of the present invention, when the second end portion 22 of the second layer 20 is exposed on the outer circumferential surface of the first layer 10 in parallel with the longitudinal direction of the first layer, a length L2 of the second layer exposed on the outer circumferential surface of the first layer 10 may be 2% or greater and 40% or less based on a width W1 of the first layer. Specifically, the length of the second layer exposed on the outer circumferential surface of the first layer may be 2% or greater, 4% or greater, 6% or greater, 8% or greater or 10% or greater and 40% or less, 38% or less, 36% or less, 34% or less, 32% or less, or 30% or less based on the width of the first layer. When the length of the second end portion of the second layer exposed on the outer circumferential surface of the first layer satisfies the ranges described above, the second end portion of the second layer may be easily finished, and the lower end portion of the jelly-roll type electrode assembly is protected.

According to an exemplary embodiment of the present invention, the jelly-roll type electrode assembly may further include a seal tape 50 attached to finish the second end portion of the first layer, and the seal tape may be attached in a direction parallel to a winding axis over the second end portion 12 of the first layer 10. In other words, the seal tape may be attached in a direction perpendicular to the longitudinal direction of the first layer over the second end portion of the first layer.

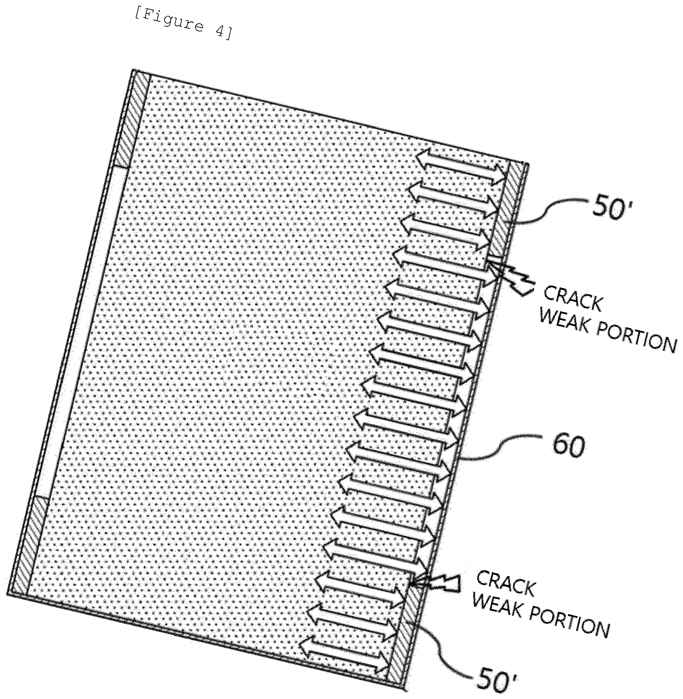

Specifically, in the jelly-roll type electrode assembly 100 according to an exemplary embodiment of the present invention, the second end portion 22 of the second layer 20 is bent to wrap around one edge portion of the first layer 10 parallel to the longitudinal direction, thereby instead serving as a seal tape to prevent damage to the lower end portion of the electrode assembly during the insertion process in which the electrode assembly 100 is inserted into a battery case. Accordingly, the seal tape may not necessarily be attached to the upper and lower end portions of the jelly-roll type electrode assembly in order to serve as a protective layer while serving to finish the second end portions of the first and second layers, and may be attached in a direction parallel to the winding axis of the first layer, i.e., in a direction perpendicular to the longitudinal direction of the first layer over the second end portion of the first layer. With such a configuration, as can be seen in FIGS. 2 and 4, problems occurring in step regions formed by the seal tapes attached to the upper and lower end portions of the first layer as the outermost layer can be minimized.

In an exemplary embodiment of the present invention, the seal tape may be selected from the group consisting of polyethylene terephthalate (PET), polypropylene (PP), polyester, polycarbonate (PC), polyimide (PI), polyethylene naphthalate (PEN), polyether ether ketone (PEEK), polyarylate (PAR), polycylicolefin (PCO), polynorbornene, polyethersulphone (PES), and cycloolefin polymer (COP).

For the seal tape, any tape may be used without limitations as long as it finishes the second end portions of the first layer and the second layer positioned on the outermost side of the wound jelly-roll type electrode assembly, prevents the second end portions of the first layer and the second layer from being folded during winding, and has sufficient rigidity to prevent defects such as dents of the jelly-roll type electrode assembly during the insertion process into the battery case. Specifically, PET may be used for the seal tape.

In an exemplary embodiment of the present invention, a thickness of the seal tape may be 10 um or greater and 100 um or less. Specifically, the thickness of the seal tape may be 20 µm or greater, 30 µm or greater, 40 µm or greater, or 50 µm or greater, and the thickness of the seal tape may be 100 µm or less, 90 µm or less, or 70 µm or less. When the thickness of the seal tape described above is satisfied, defects such as folding of the second end portions of the first layer and the second layer may be easily prevented during the winding and the insertion process into the battery case. In addition, the structure where the separator wraps around one edge portion located at the upper or lower end of the electrode assembly and the seal tape is attached in a direction perpendicular to the longitudinal direction for finishing, so that the step forming region can be significantly reduced, as compared with a structure in which seal tapes each having a predetermined thickness are attached to the upper and lower end edge portions of the electrode assembly in parallel with the longitudinal direction for finishing. With this, it is possible to reduce the above-described local problems occurring in the step forming region.

According to an exemplary embodiment of the present invention, the seal tape may be attached to cover all or a part of the second end portion of the first layer in a direction parallel to the winding axis over the second end portion of the first layer. Specifically, when the seal tape is attached to cover a part of the second end portion of the first layer in the direction parallel to the winding axis over the second end portion of the first layer, the seal tape 50 may be attached to cover 50% or more and 90% or less based on the width W1 of the second end portion of the first layer. More specifically, the seal tape may be attached to cover 50% or more and 70% or less, or 60% or more and 90% or less based on the width of the second end portion of the first layer in the direction parallel to the winding axis over the second end portion of the first layer. When the seal tape is attached to cover the above-described region of the second end portion of the first layer, the second end portion is properly finished, the step forming region due to the thicknesses of the outermost layer of the electrode assembly and the seal tape is minimized, and problems of lifting and wrinkle defects of the first layer that may occur when attaching the seal tape are minimized.

Referring to FIG. 2, in the jelly-roll type electrode assembly 100 according to an exemplary embodiment of the present invention, the seal tape 50 on the outermost surface of the electrode assembly is attached on the outer circumferential surface of the first layer in a direction parallel to the winding shaft. Therefore, when accommodating the electrode assembly into the battery case, steps due to the thickness of the seal tape may not be formed at the upper and lower end portions of the first layer as the outermost layer of the electrode assembly. In other words, a region where the seal tape and an inner wall of the battery case contact each other at a part of a circumference of an inner circumferential surface of the battery case may be formed, and a region where the outermost layer of the electrode assembly and the inner wall of the battery case contact each other at the remaining part may be formed.

With such a structure, when the first layer as the outermost layer is the first electrode, the first electrode can be directly electrically connected to the inner wall of the battery case, and a separate tab may not be included on the outermost side, so that disconnection and deformation due to a thickness of the tab can be prevented.

In addition, since a step due to the thickness of the seal tape may not be formed at the upper and lower end portions of the first layer as the outermost layer of the electrode assembly, damage to the electrode assembly that occurs when the volume of the electrode assembly changes due to charging/discharging cycles of a secondary battery can be prevented, and local problems such as a side reaction and lithium precipitation due to lack of an electrolyte solution that may occur in the seal tape portion attached to the upper and lower end portions of the electrode assembly can be reduced.

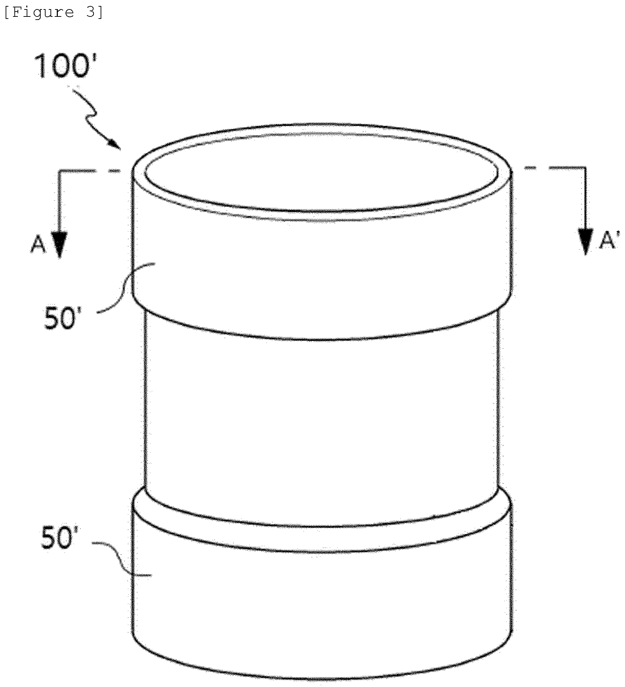

FIG. 3 is a reference drawing showing a jelly-roll type electrode assembly, and FIG. 4 is a cross-sectional view of the jelly-roll type electrode assembly of FIG. 3 taken along a direction A-A', after being inserted in a battery case.

Referring to FIG. 3, a jelly-roll type electrode assembly 100' may be provided with a seal tape 50' attached on upper and lower end portions of the first layer as an outermost layer in a direction perpendicular to a winding axis, in order to prevent defects such as the lower end portion of the outermost layer of the electrode assembly becoming dented or bent by a corner of an upper end portion of a battery case during an insertion process of inserting the electrode assembly into a battery case.

Referring to FIG. 4, since the seal tape 50' has a predetermined thickness, a step is formed on an outer circumferential surface of the outermost layer of the electrode assembly by the thickness of the seal tape, and when the electrode assembly is accommodated in the battery case 60, a region in which the electrode assembly and an inner wall of the battery case do not contact each other may be formed.

The step forming regions positioned at an upper end portion and a lower end portion of the region where the electrode assembly and the inner wall of the battery case are not in contact with each other may cause damage to the electrode assembly when the volume of the electrode assembly changes due to the charging/discharging cycles of the secondary battery. In addition, relatively high pressure is applied to the seal tape portions attached to the upper and lower portions of the electrode assembly, so that problems such as a side reaction and lithium precipitation due to lack of an electrolyte solution may occur in the corresponding portions.

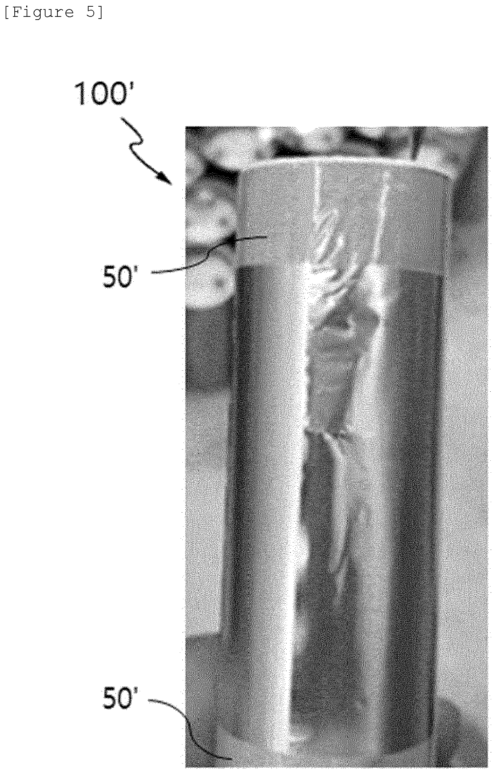

FIG. 5 is a perspective view of lifting and wrinkle defects of an outermost layer occurring in the jelly-roll type electrode assembly of FIG. 3.

Referring to FIG. 5, the seal tape 50' may be attached to finish the upper and lower end edge portions of the jelly-roll type electrode assembly 100' in the direction perpendicular to the winding axis. However, in this case, lifting and wrinkle defects of the first layer as the outermost layer may occur due to external force applied during the process of attaching the seal tape 50'.

The jelly-roll type electrode assembly according to an exemplary embodiment of the present invention can solve the above problems by changing a design of the jelly-roll electrode assembly. Specifically, during the insertion process of inserting the jelly-roll type electrode assembly into the battery case, the second layer bent to wrap around one edge portion of the first layer parallel to the longitudinal direction may serve to protect the lower end portion of the electrode assembly. Accordingly, the seal tape attached to finish the second end portion of the first layer can be attached in the direction parallel to the winding axis over the second end portion of the first layer. In this case, even after the jelly-roll type electrode assembly is inserted in the battery case, since a step due to the thickness of the seal tape may not be formed at the upper and lower end portions of the first layer as the outermost layer of the electrode assembly, damage to the electrode assembly that occurs when the volume of the electrode assembly changes due to charging/discharging cycles of a secondary battery can be prevented, and local problems such as a side reaction and lithium precipitation due to lack of an electrolyte solution that may occur in the seal tape portion attached to the upper and lower end portions of the electrode assembly can be minimized. In addition, since the seal tape can be attached in the direction parallel to the winding axis over the second end portion of the first layer, problems of lifting and wrinkle defects that may occur in the first layer as the outermost layer when the seal tape is attached in the direction perpendicular to the winding axis, as can be seen in FIG. 5, can be minimized.

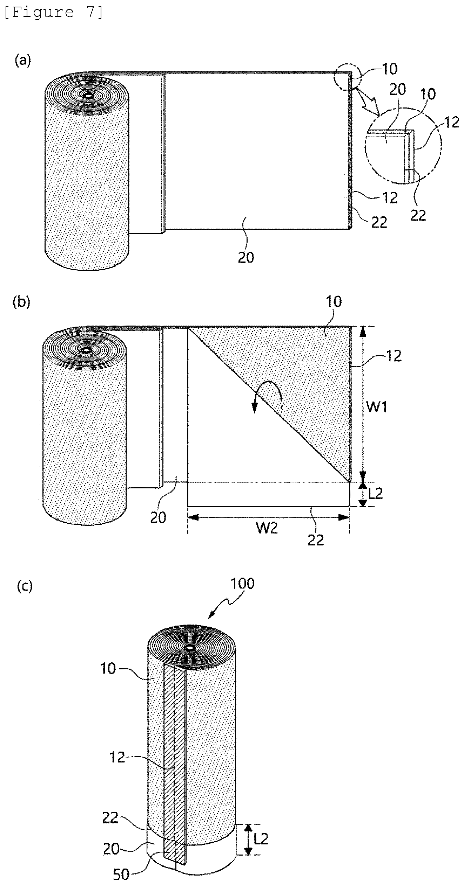

FIG. 6 shows a stack structure of a jelly-roll type electrode assembly according to an exemplary embodiment of the present invention, and FIG. 7 shows an aspect in which a second layer included in a jelly-roll type electrode assembly according to an exemplary embodiment of the present invention is bent, and thus, a second end portion is exposed on an outer circumferential surface of a first layer.

Referring to FIGS. 6 and 7, a jelly-roll type electrode assembly 100 according to an exemplary embodiment of the present invention includes a first layer 10 as an outermost layer, and a second layer 20 as a layer in contact with an inner circumferential surface of the outermost layer. The first layer and the second layer include a first end portion 11, 21 at which winding begins along a longitudinal direction, and a second end portion 12, 22 at which the winding ends, respectively, each of the first layer and the second layer may extend in the longitudinal direction with respect to the remaining layers and may be additionally wound, the first layer may be a first electrode, and the second layer may be a first separator.

Specifically, the electrode assembly may have a structure in which a first electrode/a first separator/a second electrode/a second separator are sequentially stacked and wound, and the first layer and the second layer extend in the longitudinal direction with respect to the remaining layers and are additionally wound, respectively. Therefore, an outer circumferential surface of the second layer may be in contact with an inner circumferential surface of the first layer positioned on the outermost side of the wound jelly-roll type electrode assembly, and an outer circumferential surface of the first layer may be in contact with an inner circumferential surface of the second layer. In other words, the first electrode and the first separator may be additionally wound on the outermost side of the structure in which the first electrode/the first separator/the second electrode/the second separator are sequentially stacked and wound. In this case, the jelly-roll type electrode assembly may have a structure in which the first electrode/the first separator/the first electrode/the first separator/the second electrode/the second separator are sequentially positioned from the outermost layer inwards, and the second electrode is not in contact with the inner circumferential surface of the first electrode as the outermost layer, so that an insulation problem with the second electrode may not occur. In addition, since the first layer as the outermost layer is the first electrode, when inserted into the battery case after winding, the first layer can be directly electrically connected to the inner wall of the battery case. In addition, a separate tab may not be included on the outermost side, so that disconnection and deformation due to a thickness of the outermost tab can be prevented.

According to an exemplary embodiment of the present invention, the first layer and the second layer may extend in the longitudinal direction with respect to the remaining layers and be additionally wound, respectively, and when the first layer is a first electrode and the second layer is the first separator, the additionally wound portion of the current collector of the first electrode may include an uncoated portion on at least one surface of which an active material is uncoated. Specifically, the additionally wound portion of the current collector of the first electrode has one surface, which is an outer circumferential surface and includes an uncoated portion not coated with an active material, and thus, may serve as an outer circumferential tab, or has one surface, which is an inner circumferential surface and includes an uncoated portion not coated with an active material, and thus, can solve an economic problem caused by removing an unnecessary active material coating. In this case, since the additionally wound portion of the current collector of the first electrode contacts the first separator rather than the second electrode on the inner circumferential surface thereof, an insulation problem with the second electrode may be minimized.

According to an exemplary embodiment of the present invention, lengths of the first layer and the second layer, which extend in the longitudinal direction with respect to the remaining layers and are additionally wound, may be 90% or greater and 140% or less based on a circumference of the outer circumferential surface of the first layer. Specifically, the lengths of the first layer and the second layer, which extend in the longitudinal direction with respect to the remaining layers and are additionally wound, may be 100% or greater and 120% or less, or 120% or greater and 140% or less based on the circumference of the outer circumferential surface of the first layer. If the lengths of the first layer and the second layer, which extend in the longitudinal direction with respect to the remaining layers and are additionally wound, are less than 90% based on the circumference of the outer circumferential surface of the first layer, the process of bending the second layer of the electrode assembly to wrap around one edge portion of the first layer may be difficult. In addition, if the lengths of the first layer and the second layer, which extend in the longitudinal direction with respect to the remaining layers and are additionally wound, are 1400 or greater based on the circumference of the outer circumferential surface of the first layer, the extended first layer and the second layer may increase the manufacturing cost and increase the volume of the electrode assembly.

According to an exemplary embodiment of the present invention, the first electrode may be a negative electrode, and the second electrode may be a positive electrode. Specifically, the first layer as the outermost layer of the electrode assembly may be a negative electrode that is the first electrode, and the electrode assembly may have a negative electrode-outermost structure where a negative electrode/a separator/a positive electrode/a separator are wound. In other words, the jelly-roll type electrode assembly may have an outer circumferential tab structure where the negative electrode is exposed on the outermost side.

In this case, since the negative electrode is positioned on the outermost side of the electrode assembly, unlike the existing structure where the separator is positioned on the outer side, two separators wrap around the positive electrode, which is the second electrode, and are present inside the electrode assembly. When winding the electrode assembly, a tab is attached to the uncoated portion of the first end portion where winding begins along the longitudinal direction of the positive electrode, and winding begins around the tab in the direction of the second end portion where winding ends, whereby a jelly-roll type electrode assembly can be formed.

With this, when the electrode assembly is inserted into the battery case, since the negative electrode exposed on the outermost side can be directly electrically connected to the inner wall of the battery case, low resistance characteristics and increased capacity can be implemented at the same time.

According to an exemplary embodiment of the present invention, the first electrode may be a negative electrode, and may include a negative electrode current collector and a negative electrode active material layer provided on the negative electrode current collector. Specifically, the negative electrode that is the first electrode may include a negative electrode current collector, and a negative electrode active material layer formed on one surface or both surfaces of the negative electrode current collector and including a negative electrode active material. In other words, the negative electrode active material layer is formed on a negative electrode coated portion of the negative electrode current collector, and an uncoated surface not provided with the negative electrode active material layer may be referred to as a negative electrode uncoated portion.

According to an exemplary embodiment of the present invention, when the first electrode is a negative electrode, the negative electrode current collector that is the current collector of the first electrode may include a negative electrode coated portion coated with a negative electrode active material and a negative electrode uncoated portion not coated with the negative electrode active material, and may include a tab on the negative electrode uncoated portion. However, in the case of the negative electrode-outermost structure, since the outermost layer may be in direct contact with the battery case and serve as a tab, the negative electrode current collector may not include a separate negative electrode tab.

According to an exemplary embodiment of the present invention, the negative electrode active material layer may include a negative electrode active material including one or more selected from the group consisting of a silicon-based material and a carbon-based material. In addition, the negative electrode active material layer may further include a negative electrode conductive material and a negative electrode binder, and for the negative electrode active material, the negative electrode conductive material, and the negative electrode binder, materials that are known in the art may be used without limitation.

According to an exemplary embodiment of the present invention, the negative electrode current collector may be formed of a material that has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, of the like may be used. Specifically, transition metals that adsorb carbon well, such as copper and nickel, may be used for the negative electrode current collector. For example, the current collector of the negative electrode, which is the first electrode, may be provided in the form of a copper foil (Cu Foil), and may have an outer circumferential tab structure where a copper (Cu) film, which is the negative electrode foil, is exposed on the outermost side of the jelly-roll type electrode assembly. In this case, since the copper foil is electrically connected to the battery case and the copper foil itself serves as a tab, the resistance may be greatly reduced.

A thickness of the negative electrode current collector may be 6 to 20 um. However, the thickness of the negative electrode current collector is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present invention, the negative electrode conductive material may be made from materials having conductivity without causing a chemical change in the battery. For example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

According to an exemplary embodiment of the present invention, the second electrode may be a positive electrode, and may include a positive electrode current collector and a positive electrode active material layer provided on the positive electrode current collector. Specifically, the positive electrode that is the second electrode may include a positive electrode current collector, and a positive electrode active material layer formed on one surface or both surfaces of the positive electrode current collector and including a positive electrode active material. In other words, the positive electrode active material layer is formed on a positive electrode coated portion of the positive electrode current collector, and a surface not provided with the positive electrode active material layer may be referred to as a positive electrode uncoated portion.

According to an exemplary embodiment of the present invention, when the second electrode is a positive electrode, the positive electrode current collector that is a current collector of the second electrode may include a positive electrode coated portion coated with a positive electrode active material and a positive electrode uncoated portion not coated with the positive electrode active material, and may include a tab on the positive electrode uncoated portion. Specifically, the positive electrode current collector may include a positive electrode uncoated portion, and a positive electrode tab formed on the positive electrode uncoated portion. Accordingly, the manufactured jelly-roll type electrode assembly may include one positive electrode tab, and the positive electrode uncoated portion may be formed at a central portion of the positive electrode.

According to an exemplary embodiment of the present invention, the positive electrode current collector is not particularly limited as long as it has conductivity without inducing a chemical change in the battery. Specifically, for the positive electrode current collector, stainless steel, aluminum, nickel, titanium, fired carbon, aluminum or stainless steel each surface treated with carbon, nickel, titanium, silver, or the like, or the like may be used. That is, the current collector of the positive electrode that is the second electrode may be provided in the form of surface-treated stainless steel, an aluminum foil or the like.

In addition, the positive electrode current collector may typically have a thickness of 3 to 50 um, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

According to an exemplary embodiment of the present invention, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}O₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present invention, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity in a battery. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, the first separator and the second separator serve to separate the negative electrode and the positive electrode and to provide a movement path of lithium ions, in which any separator may be used as the separator without particular limitation as long as it is typically used as a separator in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

FIG. 7 shows an aspect in which a second layer included in a jelly-roll type electrode assembly according to an exemplary embodiment of the present invention is bent, and thus, a second end portion is exposed on an outer circumferential surface of a first layer. Specifically, FIG. 7(a) shows a shape before the second layer is bent, FIG. 7(b) shows a shape after the second layer is bent in an oblique direction, and FIG. 7(c) shows a jelly-roll type electrode assembly in which the second layer is bent, and thus, the second end portion is exposed on the outer circumferential surface of the first layer.

Referring to FIGS. 6 and 7, the jelly-roll type electrode assembly 100 according to an exemplary embodiment of the present invention includes a first layer 10 as an outermost layer and a second layer 20 as a layer in contact with an inner circumferential surface of the outermost layer. The first layer and the second layer include respective first end portions 11, 21 at which winding begins along a longitudinal direction, and respective second end portions 12, 22 at which the winding ends, respectively, the first layer and the second layer may extend in the longitudinal direction and may be additionally wound, respectively, and the second layer of a portion extending in the longitudinal direction and to be additionally wound is bent to wrap around one edge portion of the first layer 10, so that the second end portion 22 of the second layer 20 may be exposed on an outer circumferential surface of the first layer 10.

According to an exemplary embodiment of the present invention, the bending shape of the second layer is not particularly limited as long as the second layer is bent to wrap around one edge portion of the first layer and thus can play a role in preventing the end portion of the electrode assembly from being damaged during an insertion process in which the jelly-roll type electrode assembly is accommodated into a battery case for accommodating the electrode assembly. For example, the second layer may be bent to wrap around one edge of the first layer parallel to the longitudinal direction, so that the second end portion of the second layer may be exposed on the outer circumferential surface of the first layer in parallel with the longitudinal direction of the first layer. Alternatively, the second layer may be bent in an oblique direction with respect to the longitudinal direction of the first layer to wrap around one edge portion of the first layer parallel to the longitudinal direction, so that the second end portion of the second layer may be exposed on the outer circumferential surface of the first layer in parallel with the longitudinal direction of the first layer.

That is, one edge portion of the first layer as an outermost layer included in the wound jelly-roll type electrode assembly may be a lower end edge portion of the jelly-roll type electrode assembly, and the second layer in contact with the inner circumferential surface of the first layer may be bent to be folded back in an oblique direction, and thus, may be exposed on the outer circumferential surface of the first layer, which is the outermost surface, in parallel with the longitudinal direction of the first layer while wrapping around the lower end edge portion of the first layer. In this case, the second end portion at which the winding of the second layer ends may be exposed on the outer circumferential surface of the first layer in parallel with a lower end portion that is one edge portion of the first layer.

An exemplary embodiment of the present invention provides a secondary battery including the jelly-roll type electrode assembly, and a battery case for accommodating the electrode assembly, and the description for the jelly-roll type electrode assembly is the same as described above. According to an exemplary embodiment of the present invention, the secondary battery may include a cap assembly coupled to an opening portion of the battery case, and the cap assembly may include a top cap, a safety vent, and a current cutoff element.

According to an exemplary embodiment of the present invention, the first electrode may be in direct contact with an inner surface of the battery case so that the battery case serves as a first electrode terminal. Specifically, when the electrode assembly is inserted in the battery case, a region where the seal tape and an inner wall of the battery case come into contact with each other at a part of a circumference of an inner circumferential surface of the battery case may be formed, and a region where the outermost layer of the electrode assembly and the inner wall of the battery case come into direct contact with each other at the remaining part may be formed. With this, when the first layer as the outermost layer is the first electrode, the first electrode can be directly electrically connected to the inner wall of the battery case, and a separate tab may not be included on the outermost side of the electrode assembly, so that disconnection and deformation due to a thickness of the tab can be prevented.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

According to an exemplary embodiment of the present invention, the battery case may have a cylindrical shape. That is, since the jelly-roll type electrode assembly according to the embodiment of the present invention may be accommodated in the cylindrical battery case, and the battery case in which an assembly including a positive electrode, a negative electrode, and a separator, a cap assembly, and the electrolyte are included has a cylindrical shape, the manufactured secondary battery itself may have a cylindrical shape.

Although the preferred embodiments have been provided for better understanding of the present invention, it will be apparent to one skilled in the art that the embodiments are only provided to illustrate the present invention and various modifications and alterations are possible within the scope and technical spirit of the present invention. Such modifications and alterations naturally fall within the scope of claims appended below.

### IDENTIFICATION OF SELECT REFERENCE NUMERALS

100, 100': jelly-roll type electrode assembly
10: first layer
11: first end portion of first layer
12: second end portion of first layer
20: second layer
21: first end portion of second layer
22: second end portion of second layer
50, 50': seal tape
60: battery case
W1: width of second end portion of first layer
W2: width of second end portion of second layer
L2: length of second layer exposed on outer circumferential surface of first layer

## Claims

1. A jelly-roll type electrode assembly comprising:
a first electrode, a first separator, a second electrode, and a second separator sequentially stacked and wound,
wherein a first layer includes an outermost layer of the first electrode and the first separator and a second layer includes the second electrode, the second separator, and a layer in contact with an inner circumferential surface of the outermost layer, the first layer and the second layer each comprise respective first end portions at which winding begins along a longitudinal direction, and respective second end portions at which winding ends, and
wherein the second layer is bent and is configured to wrap around one edge portion of the first layer parallel to the longitudinal direction, thereby exposing the second end portion of the second layer on an outer circumferential surface of the first layer.

2. The jelly-roll type electrode assembly of claim 1, wherein the second end portion of the second layer is exposed on the outer circumferential surface and extends parallel with the longitudinal direction of the first layer.

3. The jelly-roll type electrode assembly of claim 2, wherein the second layer is configured to be bent in an oblique direction with respect to the longitudinal direction of the first layer to wrap around one edge portion of the first layer parallel to the longitudinal direction, thereby exposing the second end portion of the second layer on the outer circumferential surface of the first layer in parallel with the longitudinal direction of the first layer.

4. The jelly-roll type electrode assembly of claim 1, further comprising a seal tape attachable to the second end portion of the first layer,
wherein the seal tape is attachable in a direction parallel to a winding axis over the second end portion of the first layer.

5. The jelly-roll type electrode assembly of claim 4, wherein the seal tape is attached to cover 50% or greater and 90% or less of a width of the second end portion of the first layer.

6. The jelly-roll type electrode assembly of claim 1, wherein the first layer and the second layer extend in the longitudinal direction such that excess material of the first and second layers are wound about themselves.

7. The jelly-roll type electrode assembly of claim 1, wherein the first layer is the first electrode, and the second layer is the first separator.

8. The jelly-roll type electrode assembly of claim 7, wherein the first electrode is a negative electrode, and the second electrode is a positive electrode.

9. The jelly-roll type electrode assembly of claim 1, wherein the first electrode comprises a current collector and an active material layer provided on the current collector.

10. The jelly-roll type electrode assembly of claim 9, wherein the current collector of the first electrode is a copper foil (Cu foil).

11. A secondary battery comprising:
the jelly-roll type electrode assembly according to claim 1; and
a battery case for accommodating the electrode assembly.

12. The secondary battery of claim 11, wherein the first electrode is in direct contact with an inner surface of the battery case, and the battery case is a first electrode terminal.

13. The secondary battery of claim 12, wherein the battery case is cylindrical.
